# EUROPÄISCHE PATENTSCHRIFT

(11) **EP 3 160 711 B1**
(45) Veröffentlichungstag und Bekanntmachung des Hinweises auf die Patenterteilung: **06.11.2019**
(21) Anmeldenummer: 15738854.7
(22) Anmeldetag: 27.06.2015
(51) Int. Cl.: B29C 48/27, B29C 48/691, B29C 48/693, B01D 29/66, B01D 29/01, B01D 33/15

(54) **SCHMELZEFILTERANORDNUNG MIT RÜCKSPÜL-SCHNECKENFÖRDEREINRICHTUNG**
MELT FILTER ARRANGEMENT COMPRISING A REVERSE-FLOW SCREW CONVEYOR DEVICE
SYSTÈME DE FILTRE POUR MATIÈRE EN FUSION AVEC SYSTÈME DE TRANSPORT À VIS DE RÉTROLAVAGE

(30) Priorität: 30.06.2014 DE 102014009666
(43) Veröffentlichungstag der Anmeldung: 03.05.2017
(73) Patentinhaber: Gneuss GmbH, 32549 Bad Oeynhausen (DE)
(72) Erfinder: GNEUSS, Daniel, Charlotte, North Carolina 28277 (US); GNEUSS, Detlef, 32545 Bad Oeynhausen (DE); GNEUSS, Stephan, 32545 Bad Oeynhausen (DE)
(74) Vertreter: Abel, Martin
(86) Internationale Anmeldenummer: PCT/EP2015/064624
(87) Internationale Veröffentlichungsnummer: WO 2016/001109

(56) Entgegenhaltungen:
- EP-A2- 0 379 966
- WO-A1-2004/108393
- WO-A2-01/43847
- DE-A1-102007 009 419
- DE-A1-102011 057 005
- DE-U1- 29 908 735
- DE-U1- 29 908 735
- US-A- 3 361 263
- "PROBLEM SOLUTIONS FOR ALL FIELDS OF APPLICATION", PV INTERNATIONAL PLASTICS MAGAZINE, ZECHNER UND HUETHIG VERLAG, DE, Bd. 3, Nr. 2, 1. Oktober 1992 (1992-10-01) , Seiten 68,71-72, XP000393848,
- Henschel Antriebstrechnik Gmbh: "Eine neuartige Schmelzepumpe revolutioniert den Extrusionsprozess -- K Messe", K-Online Unternehmensnews, 25. September 2013 (2013-09-25), XP055220266, Düsseldorf Gefunden im Internet: URL:http://www.k-online.de/cipp/md_k/custo m/pub/content,oid,51784/lang,1/ticket,g_u_ e_s_t/local_lang,1 [gefunden am 2015-10-13]

## Beschreibung

Die Erfindung betrifft eine Schmelzefilteranordnung für Kunststoffschmelze, bei der eine Rückspülströmung mittels einer Schneckenfördereinrichtung erzeugt wird.

### Stand der Technik

Zur Spülung von Schmelzefilteranordnungen wie sie etwa in Kunststoffextrudern Anwendung finden, wird eine Spülungsströmung verwendet, die den Schmelzefilter entgegengesetzt zu derjenigen Richtung durchströmt, in welcher die Hauptströmung durch den Schmelzefilter strömt. Dadurch werden Rückstände, die sich im Filter festgesetzt haben, aus dem Filter entfernt.

Aus der EP 1053854 A1 ist eine Reinigungseinheit bekannt, bei der eine Zahnrandpumpe Schmelze innerhalb einer Rückspülleitung zum Zwecke der Rückspülung eines Schmelzefilters fördert, um zugesetzte Löcher des Schmelzefilters zu reinigen. Es wurde seitens der Erfinder erkannt, dass bei großen Verunreinigungspartikeln in der Schmelze die Zahnradpumpe nicht zuverlässig arbeitet.

Die Druckschrift US 3,361,263 A beschreibt eine Filtervorrichtung, bei der zur Reinigung verwendete Schmelze von einer Spindelschraube verlangsamt wird.

Die Druckschrift DE 10 2007 009 419 A1 beschreibt eine Filtereinrichtung mit synchron geschalten Stelleinrichtungen, die eine Strömungsrichtungsumkehr bewirken. Eine Fördereinrichtung in Form einer Pumpe ist über Kanalabschnitte einer der Stelleinrichtungen an Filter angeschlossen, durch die Medienströme fließen.

Die Druckschrift DE 299 08 735 U1 beschreibt eine Filtereinrichtung mit einem Filterrad und einem Zylinderkolben ("Accelerator"), der an eine Ausschleuseleitung angeschlossen ist und zur stoßweisen Druckerhöhung bei einer Rückspülung dient.

Es ist daher eine Aufgabe der Erfindung, eine Möglichkeit zur Rückspülung von Schmelzefiltern aufzuzeigen, mit der Schmelzefilter zuverlässig gespült werden können.

### Darstellung der Erfindung

Diese Aufgabe wird gelöst durch die Merkmale des Anspruchs 1. Weitere Ausgestaltungsmöglichkeiten ergeben sich mit den Merkmalen der abhängigen Ansprüche sowie mit den im Weiteren dargestellten Funktionen, Eigenschaften und Merkmalen.

Es wird vorgeschlagen, innerhalb des Rückspülkanals eine kontinuierliche Fördereinrichtung in Form einer Schneckenfördereinrichtung zu verwenden, um innerhalb des Rückspülkanals eine Spülströmung zu erzeugen. Der Druck der Spülströmung oder zumindest ein Teil hiervon wird innerhalb des Rückspülkanals erzeugt. Schmelze mit groben Verunreinigungen werden durch die Schneckenfördereinrichtung zuverlässig gefördert. Die Komponenten der Fördereinrichtung werden auch bei groben Verunreinigungen nicht blockiert oder beschädigt. Gegenüber dem Stand der Technik können mit der hier beschriebenen Vorrichtung auch Schmelzen gefördert werden, die für Druckspitzen empfindlich sind, wie sie bei Zahnradpumpen entstehen, ohne dass die Schmelze durch die Druckspitzen teilweise degeneriert. Weiterhin kann die Schneckenfördereinrichtung mit einfachen Mitteln realisiert werden, wobei nur einziges bewegliches Maschinenelement verwendet wird. Zudem reinigt sich die Schneckenfördereinrichtung bzw. der betreffende Kanalabschnitt selbst, wobei im Stand der Technik im Gegensatz hierzu die Förderkanäle von Zahnradpumpen sich mit der Zeit an toten Zonen zusetzen können. Somit ist der Druck, der Mengendurchsatz bzw. die Strömungsgeschwindigkeit im Rückspülkanal nicht ausschließlich durch die betreffenden Größen im Schmelzekanal (der zu einem Werkzeug führt) bestimmt, sondern ist durch die kontinuierliche Fördereinrichtung einstellbar. Die kontinuierliche Fördereinrichtung und diejenige Einrichtung, welche den Druck bzw. die Strömungsgeschwindigkeit im Schmelzekanal bestimmt, sind unterschiedliche Einrichtungen, insbesondere hinsichtlich der Ansteuerung.

Als Schmelzekanal wird der Kanal bezeichnet, durch den die Schmelze zum Zwecke der Verarbeitung geführt wird, und in dem die Siebvorrichtung zur Abtrennung von Rückständen vorgesehen ist. Der Schmelzekanal führt zu einem Werkzeug. Der Rückspülkanal ist hingegen der Kanal, durch den ein (kleiner) Teil der Schmelze des Schmelzekanals geführt wird, um die Siebvorrichtung in entgegengesetzter Richtung (bezogen auf die Strömungsrichtung im Schmelzekanal) zu Durchströmung und Rückstände auszuspülen. Der Rückspülkanal führt zu einem Auslass, an dem die mit Rückständen versetzte Schmelze des Rückspülkanals abgegeben wird.

Als Fördereinrichtung wird erfindungsgemäß eine Schneckenfördereinrichtung verwendet. Da sich diese im Rückspülkanal befindet, wird sie als Rückspül-Schneckenfördereinrichtung bezeichnet. Die Rückspül-Schneckenfördereinrichtung befindet sich somit nicht im Schmelzekanal der Schmelzefilteranordnung. Die Rückspül-Schneckenfördereinrichtung befindet sich ebenso nicht in einem Schmelzekanal eines Extruders, der an die Schmelzefilteranordnung anschließbar ist (jedoch keinen Teil der Rückspül-Schneckenfördereinrichtung bildet). Die hier beschriebene Vorrichtung eignet sich insbesondere zum Filtern von Schmelze in Extrudern, indem die hier beschriebene Vorrichtung an diese angeschlossen wird, kann jedoch auch in Verbindung mit Vorrichtungen verwendet werden, in denen (Kunststoff-)Schmelze auf andere Weise gefördert bzw. unter Druck gesetzt wird, etwa Zahnrad-Schmelzepumpen oder andere Schmelzepumpen.

Es wird daher eine Schmelzefilteranordnung mit einem Schmelzekanal, einem Rückspülkanal und einer Siebvorrichtung vorgeschlagen. Die Siebvorrichtung dient zur Filterung von Schmelze im Schmelzekanal. Im Schmelzekanal wird die Schmelze durch die Siebvorrichtung zu einem Werkzeug gefördert, während der Rückspülkanal einen Teil der Schmelze in umgekehrter Richtung durch die Siebvorrichtung fördert, um diese durch Rückspülung zu säubern. Der Schmelzekanal und der Rückspülkanal sind unterschiedliche Kanäle, wobei der Rückspülkanal an den Schmelzekanal angeschlossen ist, so dass ein Teil der Schmelze im Schmelzekanal als Schmelzequelle zur Erzeugung der Rückspülströmung im Rückspülkanal verwendet werden kann.

Der Schmelzekanal und der Rückspülkanal erstrecken sich an unterschiedlichen Flächen bzw. Stellen der Siebvorrichtung durch die Siebvorrichtung hindurch. Da sich die Siebvorrichtung bewegen kann, kann eine Fläche der Siebvorrichtung, die zu einem Zeitpunkt vom Schmelzekanal durchflossen wird, zu einem anderen (späteren) Zeitpunkt vom Rückspülkanal (in umgekehrter Richtung) durchflossen werden. Zum gleichen Zeitpunkt sind jedoch die Querschnitte von Schmelzekanal und Rückspülkanal an unterschiedlichen Stellen der Siebvorrichtung, so dass diese beiden Kanäle unterschiedliche, sich nicht überschneidende Flächen an der Siebvorrichtung bilden. Im Rückspülkanal ist eine eigene, individuelle Schneckenfördereinrichtung vorgesehen, so dass der Rückspülkanal unabhängig von dem Schmelzekanal eine Schmelzeströmung zur Rückspülung verwendet.

Die Schmelzefilteranordnung weist ferner eine Rückspül-Schneckenfördereinrichtung auf. Diese befindet sich innerhalb des Rückspülkanals und somit auch außerhalb des Schmelzekanals. Die Rückspül-Schneckenfördereinrichtung umfasst mindestens ein Schneckengewinde, das sich innerhalb einer Hülle befindet. Da die Außenkante(n) des Schneckengewindes im Wesentlichen bis zu dieser Hülle reichen, führt eine Drehung des Schneckengewindes zu einer Strömung in Längsrichtung der Hülle. Die Längsrichtung der Hülle entspricht der Längsrichtung des Schneckengewindes; die Drehachse des Schneckengewindes ist konzentrisch zur Hülle. Der Aufbau einer Schneckenfördereinrichtung ist ferner auch unter dem Begriff "archimedische Schraube" bekannt.

Auch Extruder verwenden Extruderschnecken, die nach dem gleichen Prinzip arbeiten, da jedoch die Rückspül-Schneckenfördereinrichtung funktionell und hinsichtlich des Orts im Gesamtsystem sich grundsätzlich von einer Extruderschnecke unterscheidet, wird nur für die Rückspül-Schneckenfördereinrichtung der Begriff "Schneckenfördereinrichtung" verwendet, während bei Ausführungsformen, die einen Extruder betreffen, dessen Förderanlage im Schmelzekanal als Extruderschnecke oder Extruderschneckenvorrichtung bezeichnet wird.

Die Rückspül-Schneckenfördereinrichtung im Rückspülkanal erlaubt eine Förderung von Schmelze unabhängig vom Druck oder von der Strömungsgeschwindigkeit im Schmelzekanal und kann über einen beliebigen Zeitraum zur kontinuierlichen Förderung verwendet werden, während etwa kolbenbasierte Systeme eine Förderung nur im Rahmen des Kolbenvolumens erlauben und daher die Zeitdauer der Förderung im Rückspülkanal begrenzt ist.

Die hier beschriebene Schmelzefilteranordnung ist eingerichtet, mit Schmelze fördernden Systemen wie Schmelzepumpen (insbesondere Zahradpumpen) oder Extrudern kombiniert zu werden. Der Schmelzefilteranordnung kann ein Extruder vorgeschaltet und/oder nachgeschaltet sein. Der Extruder bildet keinen Teil der Schmelzefilteranordnung. Vielmehr ist die Schmelzefilteranordnung eingerichtet, an zumindest einen Extruder angeschlossen zu werden. Der Schmelzekanal der Schmelzefilteranordnung wird hierbei an den Schmelzekanal des betreffenden Schmelze fördernden Systems angeschlossen.

Insbesondere bei Anwendungen mit Extrudern (d.h. wenn ein Extruder an die Schmelzefilteranordnung angeschlossen ist) ist der Schmelzekanal eingerichtet, einen (End-)abschnitt einer weiteren Schneckenfördereinrichtung in Form einer Extruderschneckenvorrichtung zur Förderung von Schmelze in dem Schmelzekanal aufzunehmen, oder die Extruderschneckenvorrichtung eines angeschlossenen Extruders die Schmelzefilteranordnung ist auf den Schmelzekanal der Schmelzefilteranordnung gerichtet, ohne sich auch nur teilweise in dem Schmelzekanal der Schmelzefilteranordnung zu befinden. Daher wird im Schmelzekanal die Schmelze von einer Extruderschneckenvorrichtung gefördert, wobei die Extruderschneckenvorrichtung einem Extruder angehört, und die Schmelzefilteranordnung ausgestaltet ist, an einen derartigen Extruder angeschlossen zu werden. Im Rückspülkanal der Schmelzefilteranordnung wird die Schmelze von der Rückspül-Schneckenfördereinrichtung gefördert, wobei die Schneckenfördereinrichtung einerseits und die Extruderschneckenvorrichtung eines an der Schmelzefilteranordnung angeschlossen Extruders andererseits unterschiedliche Komponenten sind. Insbesondere verfügen diese jeweils über einen eigenen Antrieb, so dass die Schmelze in den beiden genannten Kanälen individuell gefördert (und mit Druck beaufschlagt) werden kann.

Der Rückspülkanal weist einen Eingang auf, der mit dem Schmelzekanal verbunden ist. Die Rückspül-Schneckenfördereinrichtung ist dem Eingang nachgeschaltet. Der Rückspülkanal bildet eine Abzweigung des Schmelzekanals und ist über eine Abzweigung des Schmelzekanals (bzw. über den Eingang des Rückspülkanals) mit dem Schmelzekanal verbunden. Der Eingang des Rückspülkanals bildet eines der beiden Enden des Rückspülkanals, die von dem Rückspülkanal miteinander verbunden werden. Ein Eingang des Schmelzekanals ist dem Rückspülkanal stromaufwärts (bezogen auf den Schmelzekanal) vorgeschaltet.

Der Rückspülkanal weist ferner eine Spüldüse auf, die in Form einer Schlitzdüse vorgesehen ist. Dadurch ergibt sich eine hohe Strömungsgeschwindigkeit an der betreffenden Fläche der Siebvorrichtung, wodurch Rückstände effektiv entfernt werden. Die Spüldüse ist auf eine Fläche der Siebvorrichtung innerhalb des Rückspülkanals gerichtet. Die Längserstreckungsrichtung der Schlitzdüse ist bei einem Siebrad als Siebvorrichtung radial zu dem Siebrad ausgerichtet. Insbesondere erfasst die Schlitzdüse das Siebrad (bzw. den Bereich des Siebrads, der Löcher aufweist) in radialer Richtung vollständig, so dass alle Löcher im Siebrad von der Schlitzdüse erfasst werden. Durch Drehen des Siebrads während der Rückspülung kann so ein betreffender Winkelabschnitt (oder bei einer vollen Umdrehung des Siebrads das gesamte Siebrad) in bekannter Weise gespült werden.

Die Siebvorrichtung wird dabei von einem drehbar gelagerten Siebrad gebildet. Die Siebvorrichtung kann insbesondere einen Klinkenantrieb aufweisen, der von einem Zahnring des Siebrads und einen darin eingreifenden Hubkolben gebildet wird. Es können ferner alternative Antriebe für das Siebrad verwendet werden. Wie bemerkt kann die Siebvorrichtung einen Klinkenantrieb aufweisen, der von einem Zahnring des Siebrads und einen darin eingreifenden Hubkolben gebildet wird. Alternativ kann die Siebvorrichtung einen Freilauf und einen Hubkolben aufweisen.

Der Hubkolben treibt einen Zahnring des Siebrads an. Ferner kann die Siebvorrichtung einen elektrischen aufweisen, der beispielsweise einen Elektromotor und gegebenenfalls ein Getriebe umfasst. Über das Getriebe wird der Zahnring des Siebrads (vom Elektromotor) angetrieben. Somit ergeben sich folgende Antriebsmöglichkeiten: Das Siebrad kann von einem Hubkolben angetrieben werden, dem ein Freilauf nachgeschaltet ist, wobei das Siebrad über den Freilauf angetrieben wird.

Der Freilauf kann insbesondere über ein Ritzel und einen Zahnring des Siebrads das Siebrad antrieben. Ferner kann ein Elektromotor verwendet werden, der über ein Getriebe das Siebrad antreibt. Es kann hierzu ein Ritzel und ein darin eingreifender Zahnring des Siebrads vorgesehen sein, wobei Ritzel und Zahnring dem Getriebe nachgeschaltet sind.

Zur Darstellung der Schmelzefilteranordnung wird ein Hauptkörper verwendet, in dem der Schmelzekanal und der Rückspülkanal angeordnet sind. Der Schmelzekanal und der Rückspülkanal oder Abschnitte hiervon sind innerhalb des gleichen Hauptkörpers der Schmelzefilteranordnung jeweils als Bohrung in dem Hauptkörper ausgebildet. Dadurch kann der Rückspülkanal besonders kurz ausgeführt werden und es ergibt sich eine kompakte Anordnung. Der Rückspülkanal (oder der Schmelzekanal) kann neben einer Bohrung eine weitere Bohrung umfassen und/oder kann weitere Bereiche umfassen, die als kanalbildende Ausnehmung ausgebildet sind. Insbesondere kann der Rückspülkanal und/oder der Schmelzekanal zumindest einen Abschnitt aufweisen, in dem der Querschnitt nicht von einer kreiszylindrischen Bohrung gebildet wird. Etwa die Spüldüse (als Teil des Rückspülkanals) kann einen Querschnitt aufweisen, der sich im Längsverlauf ändert. Hierbei kann sich die Querschnittsfläche und/oder die Form des Querschnitts mit dem Längsverlauf ändern. Zudem kann der Rückspülkanäle (miteinander verbundene) Abschnitte aufweisen, die sich in unterschiedliche Richtungen erstrecken, etwa um eine gewinkelte Kanalform zu gestalten. Hierbei kann der Abschnitt, in dem sich die Spüldüse befindet, gewinkelt zu dem Abschnitt verlaufen, in dem sich die Rückspül-Schneckenfördereinrichtung befindet. Diese Abschnitte können im Wesentlichen senkrecht zueinander verlaufen.

Der Rückspülkanal und der Schmelzekanal sind innerhalb des Hauptkörpers miteinander verbunden. Die Bohrung, die den Schmelzekanal der Schmelzefilteranordnung bildet, schneidet die Bohrung, die zumindest einen Abschnitt des Rückspülkanals bildet. Die Bohrungen überlappen sich daher räumlich. Dadurch ergibt sich eine Abzweigung des Schmelzekanals, die den Rückspülkanal (direkt) mit dem Schmelzekanal verbindet. Diese Abzweigung bildet ein Ende des Rückspülkanals, d.h. den Eingang des Rückspülkanals. An der Abzweigung steht der Rückspülkanal im Wesentlichen senkrecht zu dem Schmelzekanal, wobei auch gezielt eine von der Senkrechten abweichende Neigung (zum Einlass oder zum Auslass des Schmelzekanals hin) vorgesehen sein kann, um die Strömung im Schmelzekanal für die Ausbildung der Strömung im Rückspülkanal mit zu nutzen.

Ein auf die Siebvorrichtung gerichteter Auslass, der Teil des Rückspülkanals ist, wird durch eine Ausnehmung in dem Hauptkörper gebildet. An der zur Siebvorrichtung hin gewandten Seite deckt der Querschnitt des Auslasses zumindest den Austrittsquerschnitt der Spüldüse ab.

Die Rückspül-Schneckenfördereinrichtung kann eine Förderschnecke mit einem Schneckengewindeabschnitt und einem Antriebswellenabschnitt aufweisen. Der Schneckengewindeabschnitt befindet sich insbesondere (bezogen auf die Strömungsrichtung im Rückspülkanal) an oder direkt nach der Abzweigung, die den Eingang des Rückspülkanal bildet. Der Antriebswellenabschnitt ragt aus der Schmelzefiltervorrichtung heraus. Hierzu kann die Förderschnecke in einer Bohrung angeordnet sein, die einen Abschnitt aufweist, der einen Teil des Rückspülkanals bildet, und die einen Abschnitt aufweist, durch den sich der Antriebswellenabschnitt erstreckt. Da durch den Antriebswellenabschnitt im Wesentlichen keine Schmelze gefördert wird, wird der Abschnitt der Bohrung, in dem sich der Antriebswellenabschnitt befindet, nicht zum Rückspülkanal gerechnet. Der Abschnitt der Bohrung, in dem sich der Schneckengewindeabschnitt befindet, ist Teil des Rückspülkanals, insbesondere der Einlassabschnitt des Rückspülkanals, in dem sich auch der Eingang befindet.

Es ist ein Dichtungselement vorgesehen, das den Rückspülkanal abschließt. Dieses Dichtungselement befindet sich vorzugsweise im Abschnitt, in dem sich der Antriebswellenabschnitt befindet. Als Dichtungsabschnitt kann ein Gewinde aufweisen, dessen Gewindetiefe geringer ist als die Gewindetiefe der Förderschnecke. Das Gewinde im Dichtungsabschnitt hat ferner eine Steigung, die geringer ist als die Steigung der Förderschnecke bzw. des Gewindes der Förderschnecke innerhalb des Rückspülkanals. Dadurch wirkt das Gewinde, welches das Dichtungselement als Dichtung, da im Betrieb ein Austritt von Schmelze nach außen vermieden wird. Weiterhin sind abdichtende Lager am Antriebswellenabschnitt möglich, die das Dichtungselement vorsehen. Das Dichtungselement erstreckt sich vorzugsweise bis zur Förderschnecke bzw. bis zum Eingang des Rückspülkanals.

Die Schmelzefiltervorrichtung ist vorzugsweise ferner mit einem Antrieb ausgestattet, insbesondere mit einem elektrischen Antrieb. Dieser weist einen Elektromotor auf, mit dem die Rückspül-Schneckenfördereinrichtung angetrieben wird. Der Antrieb der Rückspül-Schneckenfördereinrichtung ist getrennt von Förderantrieben zum Fördern und Druckaufbau in dem Schmelzekanal ansteuerbar. Insbesondere beim Einsatz in einem Extruder erstreckt sich durch das Extrudergehäuse (zumindest abschnittsweise) eine Extruderschneckenvorrichtung, etwa mindestens eine Einfach- oder Doppelschnecke, wobei zusätzlich die Rückspül-Schneckenfördereinrichtung im Rückspülkanal vorgesehen ist. Die Extruderschneckenvorrichtung und die Rückspül-Schneckenfördereinrichtung werden von verschiedenen Antrieben angetrieben. Insbesondere werden die Extruderschneckenvorrichtung und die Rückspül-Schneckenfördereinrichtung mit jeweils individuell einstellbaren Drehzahlen betrieben. So wäre ein gemeinsamer Antrieb denkbar, sofern die Drehzahl der Rückspül-Schneckenfördereinrichtung getrennt von der Drehzahl der Extruderschneckenvorrichtung einstellbar ist, etwa mittels einem steuerbaren Getriebe und/oder einer steuerbaren Kupplung. Diesbezüglich kann die Stelle der Extruderschneckenvorrichtung auch Zahnräder einer Zahnradpumpe treten, die einen Förderantrieb für den Schmelzekanal darstellt.

Die Schmelzefiltervorrichtung weist üblicherweise eine Temperierungseinrichtung auf, die sich am Rückspülkanal befindet, um die Temperatur innerhalb des Rückspülkanal beeinflussen zu können. Die Temperierungseinrichtung kann eine elektrische Heizung oder ein Wärmemediumkanal sein, der am Rückspülkanal ausgebildet ist bzw. wärmeübertragend mit diesem verbunden ist. Die Temperierungseinrichtung kann sich innerhalb des Hauptkörpers befinden, um dessen Temperatur und somit auch die Temperatur am Rückspülkanal einzustellen. Am Rückspülkanal kann eine weitere Temperierungseinrichtung ausgebildet sein, die als elektrische Heizung oder Wärmemediumkanal ausgebildet ist. Diese Temperierungseinrichtung kann mit der vorangehend beschriebenen Temperierungsvorrichtung verbunden sein. Dadurch kann der Rückspülkanal und insbesondere die Schneckenfördereinrichtung in diesem Kanal mit einer eigenen Temperierungsvorrichtung versehen sein.

Die Schmelzefiltervorrichtung kann ein Gehäuse aufweisen, das dieses umgreift. Insbesondere die Siebvorrichtung wird vollständig von dem Gehäuse umschlossen. Im Falle eines Siebrads kann dieses aus der Schmelzefiltervorrichtung und insbesondere aus dem Hauptkörper herausstehen. Der Hauptkörper kann zweiteilig ausgeführt sein, etwa als Einlaufkörper und als Auslaufkörper (bzw. Einlaufblock und als Auslaufblock), wobei zwischen diesen das Siebrad angeordnet ist. Hierbei ist umschließt das Gehäuse das Siebrad vollständig. Das Siebrad ist somit vollständig gekapselt, um die Erstarrung von Schmelze am Siebrad und ferner Ablagerungen zu vermeiden. Es ist ein Zugang zum Siebrad vorgesehen, der im Falle der Wartung geöffnet werden kann.

### Kurze Beschreibung der Zeichnungen

Die Figur 1 zeigt eine schematische Darstellung zur Erläuterung des erfindungsgemäßen Konzepts.
Die Figur 2 zeigt eine Schmelzefiltervorrichtung im Querschnitt.
Die Figur 3 zeigt die Schmelzefiltervorrichtung der Figur 2 entlang einer Ebene A--A
Die Figur 4 zeigt eine perspektivische Darstellung der Schmelzefiltervorrichtung der Figuren 2 und 3.

### Detaillierte Beschreibung der Zeichnungen

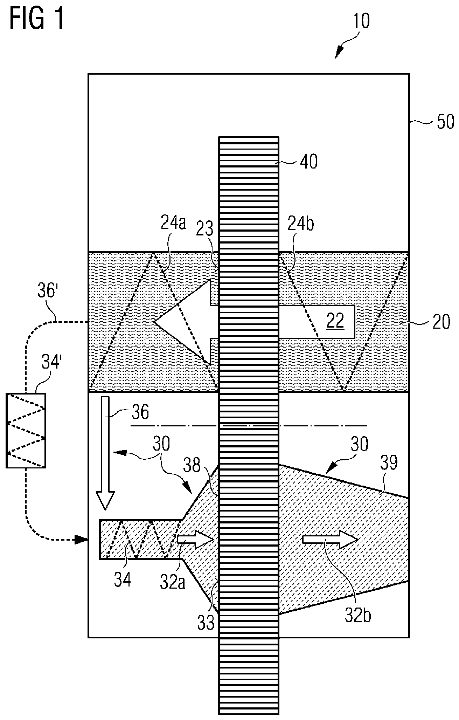

Die Figur 1 zeigt einen schematisch dargestellten Querschnitt durch die hier beschriebene Schmelzefilteranordnung 10. Die Schmelzefilteranordnung 10 umfasst einen Schmelzekanal 20, einen Rückspülkanal 30 und eine Siebvorrichtung in Form eines Siebrads 40. Das Siebrad 40 weist eine Drehachse auf, die als strichpunktierte Linie dargestellt ist. Die Schmelze im Schmelzekanal 20 wird entlang der mit Pfeil 22 dargestellten Förderrichtung befördert. Hierzu kann eine Schmelzepumpe (nicht dargestellt) oder ein Extruder (nicht dargestellt) an die Schmelzefilteranordnung angeschlossen sein. Üblicherweise ragen Extruderschnecken von Extrudern, die an die Schmelzefilteranordnung 10 angeschlossen sind, nicht in den Schmelzekanal 20 der Schmelzefilteranordnung hinein. Symbolhaft sind Extruderschnecken 24a, b dargestellt, die nicht Teil der Schmelzefilteranordnung 10 sind, sondern die angeschlossenen Extrudern angehören. Diese symbolhafte Darstellung soll in Erinnerung rufen, dass der Druck bzw. die Förderung in dem Schmelzekanal nicht durch eine Komponente der Schmelzefilteranordnung 10 erzeugt wird, sondern dass angeschlossene Extruder oder ähnliches Komponenten aufweisen, die diesen Druck erzeugen bzw. die Förderung bewerkstelligen. Die Extruderschnecken (symbolhaft dargestellt durch Bezugszeichen 24a, b) angeschlossener Extruder fördern die Schmelze durch das Siebrad 40, wodurch sich Feststoffe im Siebrads 40 als Rückstände festsetzen.

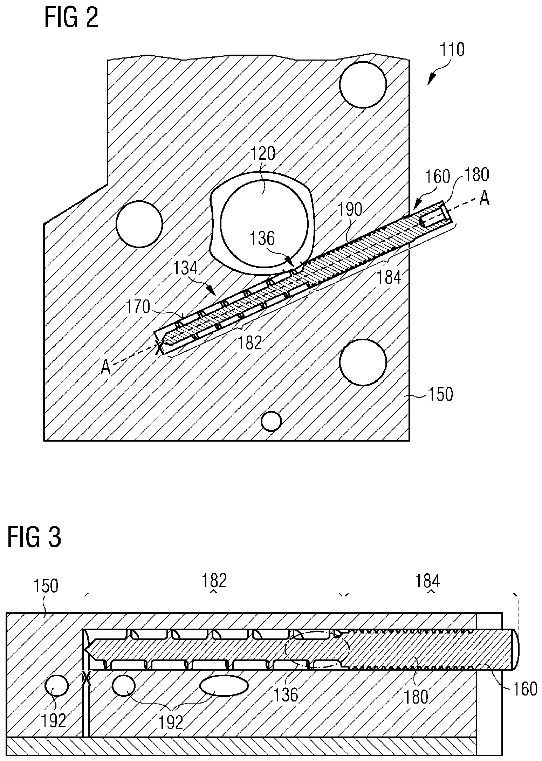

Zumindest eine der Extruderschnecken 24 a,b, die angeschlossenen Extrudern angehören, ist optional; die zumindest eine Extruderschnecke 24 a,b endet am Siebrad oder an einem Hauptkörper (siehe Fig. 2), in dem das Siebrad angeordnet ist. Die Extruderschnecken 24 a,b sind insbesondere zu dem Siebrad beabstandet etwa indem diese nicht in den Hauptkörper hineinragen oder indem diese zu den Öffnungen, die der Hauptkörper bildet, über eine Lücke beabstandet sind. Insbesondere kann die zumindest eine Extruderschnecke auch nicht in die Schmelzefilteranordnung 10 hineinragen, wobei sich dann die zumindest eine Extruderschnecke in mindestens einem Extrudergehäuse (nicht dargestellt) befindet, an das die Schmelzefilteranordnung angeschlossen ist. Als Alternative kann anstatt der Extruderschnecken eine Schmelzepumpe, insbesondere eine Zahnradpumpe, an die Schmelzefilteranordnung 10 angeschlossen sein. Die dargestellten symbolhaften Extruderschnecken 24 a, b sollen auch derartige andere Schmelzepumpen symbolisieren, da diese wie Extruderschnecken den Druck und die Förderströmung in dem Schmelzekanal 20 der Schmelzefilteranordnung 10 erzeugen.

Um das Siebrad 40 zu reinigen, wird in dem Rückspülkanal 30 Schmelze gefördert, die entgegengesetzt zur Richtung des Pfeils 22 durch das Siebrad 40 transportiert wird. Die Schmelzeförderrichtung im Rückspülkanal 30 ist durch die Pfeile 32a,b dargestellt. Es ist zu erkennen, dass der Schmelzekanal 20 und der Abschnitt des Rückspülkanals 30, der durch das Siebrad 30 führt, zueinander versetzt sind. Mit anderen Worten erstreckt sich der Schmelzekanal 20 und der Rückspülkanal 30 an unterschiedlichen Flächen 23, 33 bzw. an Flächen die senkrecht zum Schmelzekanal 20 zueinander versetzt sind.

Die Schmelzefilteranordnung 10 weist ferner eine Rückspül-Schneckenfördereinrichtung 34 auf. Diese befindet sich innerhalb des Rückspülkanals 30. Es besteht eine Verbindung 36, den Schmelzekanal 20 mit dem Rückspülkanal 30 verbindet. Die Verbindung 36 bildet insbesondere den Eingang des Rückspülkanals 30. Die Verbindung 36 ist nur schematisch dargestellt und kann von einem Kanal mit beliebiger Länge gebildet werden, vorzugsweise mit einem Kanal der Länge null, indem eine Öffnung im Schmelzekanal 20 bereits den Eingang des Rückspülkanals bildet, an dem vorzugsweise (wie in Figs. 2 - 4 dargestellt) die Rückspül-Schneckenförder-einrichtung 34 angeordnet ist. Die Verbindung 36 und die Rückspül-Schneckenfördereinrichtung 34 sind in dem Hauptkörper 50 der Schmelzefilteranordnung 10 integriert.

Alternativ ist die Verbindung 36' (oder zumindest ein Teil hiervon) sowie die Rückspül-Schneckenfördereinrichtung 34' außerhalb des Hauptkörper 50 und über Kanäle bzw. Leitungen mit der restlichen Schmelzefilteranordnung verbunden. Dies erlaubt einen externen Anschluss von Komponenten, jedoch ist der Förderweg in dem Rückspülkanal vergleichsweise lang.

Der Pfeil 36 symbolisiert die Verwendung des Schmelzekanals 20 als Schmelzemassequelle für den Rückspülkanal und gibt keine geometrischen Merkmale wieder.

Die Rückspül-Schneckenfördereinrichtung 34 (und auch 34') wird gebildet von einer Förderschnecke, die innerhalb einer Hülle bzw. Bohrung läuft. Stromabwärts der Rückspül-Schneckenfördereinrichtung 34 weitet sich der Rückspülkanal in einer Richtung) auf und bildet eine Schlitzdüse 38. Auf der gegenüberliegenden Seite des Siebrads 40 befindet sich ein Auslass 39. Der Auslass 39 erstreckt sich in Strömungsrichtung des Rückspülkanals und weist ein dem Siebrad abgewandtes Ende auf, an dem Schmelze zusammen mit den aus dem Siebrad 30 entfernten Rückständen abgegeben wird.

Die Schmelzefilteranordnung 110 der Figur 2 zeigt in Querschnittsansicht den Schmelzekanal 120 als Bohrung in dem Hauptkörper 150. Der Schmelzekanal verläuft senkrecht zur Zeichenebene. Eine weitere Bohrung 160 in dem Hauptkörper, die innerhalb der Zeichenebene verläuft, bildet die Hülle 170 einer Rückspül-Schneckenfördereinrichtung 134, in der eine Förderschnecke 180 mit einem Schneckengewindeabschnitt 182 und einem Antriebswellenabschnitt 184 aufweist. Diese Abschnitte 182, 184 sind in Längsrichtung der Schneckenfördereinrichtung 134 nacheinander angeordnet. Der Antriebswellenabschnitt ragt teilweise aus dem Hauptkörper 150 heraus, um eine mechanische Schnittstelle zur Verbindung mit einem Antrieb zu bilden.

In dem Antriebswellenabschnitt 184, insbesondere in dem Teil des Antriebswellenabschnitts 184, der nicht herausragt, ist ein Dichtungselement 190 angeordnet, das die Förderschnecke gegenüber dem Hauptkörper 150 abdichtet. Das Dichtungselement 190 ist in Form eines Außengewindes der Förderschnecke ausgebildet, wobei dessen Gewindetiefe geringer ist als die Gewindetiefe des Schneckengewindeabschnitts 182 der Förderschnecke und dessen Steigung geringer ist als die Steigung des Schneckengewindeabschnitts 182 der Förderschnecke 160.

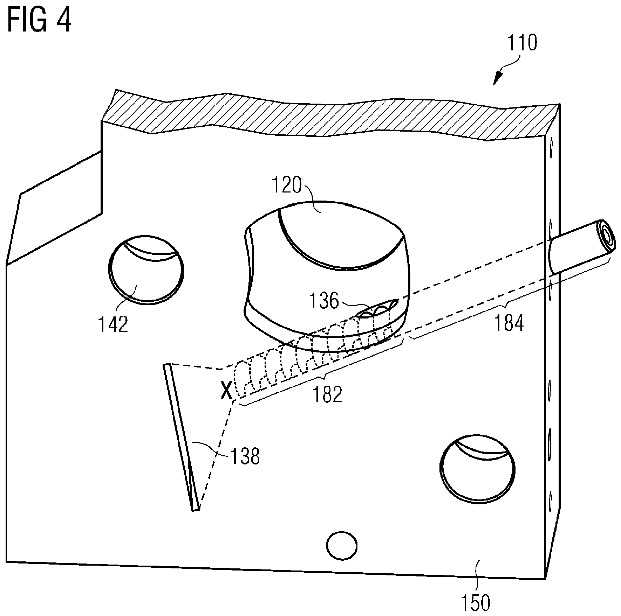

Die Bohrung 160 schneidet den Schmelzekanal 120 und bildet dort eine Öffnung 136, deren weite durch Striche in der Figur 2 hervorgehoben sind. Die Öffnung 136 entspricht der vorangehend genannten Verbindung 36, wobei jedoch deren Länge minimiert ist. Durch die Öffnung 136 wird Schmelze an den Schneckengewindeabschnitt 182 von dem Schmelzekanal an den Rückspülkanal übertragen. Die Öffnung bildet den Eingang bzw. ein Ende des Rückspülkanals. Die Öffnung befindet sich an einem Ende des Schneckengewindeabschnitts 182. Das entgegengesetzte Ende des Schneckengewindeabschnitts 182 bildet das Abgabeende der Rückspül-Schneckenfördereinrichtung. An diesem Ende schließt sich an der mit X gekennzeichneten Stelle eine Schlitzdüse an. Diese erstreckt sich senkrecht zur Zeichenebene und ist aus Gründen der Klarheit in den Figur 3 und 4 dargestellt.

Die Figur 3 zeigt die Bohrung 160 im Schnitt entlang der Ebene A--A der Figur 2. In dieser Bohrung 160 befindet sich die Förderschnecke 180 mit dem Schneckengewindeabschnitt 182 und dem Antriebswellenabschnitt 184. Über die Öffnung 136 (deren Normale senkrecht zur Bohrung ist) gelangt Schmelze zum Schneckengewindeabschnitt 182, die von dieser bis zum Ende der Rückspül-Schneckenfördereinrichtung gefördert wird. Die Stelle, an der sich das Ende der Rückspül-Schneckenfördereinrichtung, ist mit X gekennzeichnet. Es ist zu erkennen, dass sich an die Rückspül-Schneckenfördereinrichtung ein Kanalabschnitt anschließt, der zur Schlitzdüse führt oder der die Schlitzdüse oder einen Abschnitt hiervon bildet. Der Kanalabschnitt und/oder die Schlitzdüse kann durch Erodieren des Hauptkörpers gebildet werden. Ferner sind Wärmemediumkanäle 192 an der Rückspül-Schneckenfördereinrichtung vorgesehen.

Die Figur 4 ist eine perspektivische Ansicht der Schmelzefilteranordnung 110, in der der Schmelzekanal 120 innerhalb des Hauptkörpers 150 zu erkennen ist. Der Schmelzekanal 150 wird von der Bohrung 160 (gestrichelt dargestellt) geschnitten, so dass sich eine Öffnung 136 ergibt. Es ist durch diese Öffnung hindurch ein Teil (bzw. ein Ende) des Schneckengewindeabschnitts 182 der Förderschnecke 180 zu sehen. Der Antriebswellenabschnitts 184 ragt teilweise aus dem Hauptkörper 150 hinaus, so dass ein Antrieb angeschlossen werden kann. Die Förderschnecke 180, der Schneckengewindeabschnitt 182 bzw. die Rückspül-Schneckenfördereinrichtung endet an der mit X gekennzeichneten Stelle. Es schließt sich an diese Stelle die Spüldüse 138 an, die als Schlitzdüse ausgestaltet ist. Die Darstellung der Figur 4 endet zur besseren Übersicht an der Fläche 33, an der die Spüldüse 138 auf das Siebrad gerichtet ist.

Das Siebrad (nicht dargestellt) ist über eine Drehachse in einem Lager 142 des Hauptkörpers 150 befestigt. Es ist zu erkennen, dass der Schlitz der Schlitzdüse radial zu diesem Lager ausgerichtet ist. Mit anderen Worten erstreckt sich der Schlitz der als Schlitzdüse ausgebildeten Spüldüse 138 auf einer Geraden, durch die auch die Drehachse des Siebrads 30 verläuft. Der Schlitz kann auch gewinkelt zu einer Geraden verlaufen, in der die Drehachse liegt. In diesem Fall kann der Schlitz länger ausgebildet sein als im radial ausgerichteten Fall, wobei der Schlitz vorzugsweise auf den Radialabschnitt des Siebrads ausgerichtet ist, in dem die Löcher des Siebrads vorliegen.

In den Figuren 2 - 4 werden Bezugszeichen mit drei Stellen verwendet. Die dadurch gekennzeichneten Elemente entsprechen den betreffenden Elementen der Figur 1, soweit die letzten beiden Stellen der Bezugszeichen der Figuren 2 - 4 dem betreffenden Bezugszeichen der Figur 1 entsprechend.

**Bezugszeichenliste**

| | |
|---|---|
| 10, 110 | Schmelzefilteranordnung |
| 20, 120 | Schmelzekanal |
| 30 | Rückspülkanal |
| 40 | Siebrad, Siebvorrichtung |
| 22 | Pfeil (Förderrichtung im Schmelzekanal 20) |
| 24a, b | Extruderschnecken, symbolhafte Darstellung angeschlossener, Druck erzeugender Systeme |
| 32a,b | Pfeile (Förderrichtung im Rückspülkanal 30) |
| 23, 33 | Flächen, an denen sich Schmelzekanal 20 und Rückspülkanal 30 durch die Siebvorrichtung erstrecken |
| 34, 34', 134 | Rückspül-Schneckenfördereinrichtung |
| 36, 36' | Verbindung zwischen Schmelzekanal 20 und Rückspülkanal 30 |
| 50, 150 | Hauptkörper |
| 36 | Pfeil, symbolisiert die Verwendung des Schmelzekanals 20 als Schmelzemassequelle für den Rückspülkanal |
| 136 | Öffnung |
| 38, 138 | Spüldüse, insbesondere ausgebildet als Schlitzdüse |
| 39 | Auslass |
| 160 | Bohrung zur Aufnahme der Förderschnecke 180 |
| 170 | Hülle der Rückspül-Schneckenfördereinrichtung 134 |
| 180 | Förderschnecke |
| 182 | Schneckengewindeabschnitt |
| 184 | Antriebswellenabschnitt |

**Fortsetzung Bezugszeichenliste**

| | |
|---|---|
| 190 | Dichtungselement |
| X | Ende der Rückspül-Schneckenfördereinrichtung, Beginn der Schlitzdüse |
| A--A | Ebene |

## Patentansprüche

1. Schmelzefilteranordnung (10) mit einem Schmelzekanal (20), einem Rückspülkanal (30) und einer Siebvorrichtung (40) zur Filterung von Schmelze im Schmelzekanal (20), wobei sich der Schmelzekanal (20) und der Rückspülkanal (30) an unterschiedlichen Flächen (23, 33) der Siebvorrichtung (40) durch die Siebvorrichtung hindurch erstreckt, **dadurch gekennzeichnet,**
**dass** die Schmelzefilteranordnung (10) ferner eine Rückspül-Schneckenfördereinrichtung (34, 34') innerhalb des Rückspülkanals (30) aufweist, wobei der Rückspülkanal eine Spüldüse (38, 138) aufweist, die auf eine Fläche (33) der Siebvorrichtung innerhalb des Rückspülkanals (30) gerichtet ist und die Siebvorrichtung (40) von einem drehbar gelagerten Siebrad (40) gebildet wird, wobei die Spüldüse (38, 138) in Form einer Schlitzdüse vorgesehen ist und wobei ferner der Schmelzekanal (20) und der Rückspülkanal (30) innerhalb des gleichen Hauptkörpers (50, 150) der Schmelzefilteranordnung (10, 110) jeweils zumindest abschnittsweise als Bohrung in dem Hauptkörper ausgebildet sind und die Bohrung des Schmelzekanals (20, 120) die Bohrung (160) des Rückspülkanals (30, 130) schneidet, wodurch der Schmelzekanal (20, 120) direkt mit dem
Rückspülkanal (30, 130) verbunden ist.

2. Schmelzefilteranordnung nach Anspruch 1, wobei der Schmelzekanal (20) eingerichtet ist, eine weitere Schneckenfördereinrichtung in Form einer Extruderschneckenvorrichtung (24a, b) zur Förderung von Schmelze in dem Schmelzekanal aufzunehmen.

3. Schmelzefilteranordnung nach Anspruch 1 oder 2, wobei der Rückspülkanal einen Eingang (36, 136) aufweist, der mit dem Schmelzekanal (120) verbunden ist, wobei die Rückspül-Schneckenfördereinrichtung (34, 34'; 134) dem Eingang (36, 136) nachgeschaltet ist.

4. Schmelzefiltervorrichtung nach einem der vorangehenden Ansprüche, wobei die Siebvorrichtung:
(a) einen Klinkenantrieb aufweist, der von einem
Zahnring des Siebrads und einen darin eingreifenden Hubkolben gebildet wird;
(b) einen Freilauf und einen Hubkolben aufweist, wobei der Hubkolben einen Zahnring des Siebrads antreibt; oder (c) einen elektrischen Antrieb aufweist, der insbesondere einen Elektromotor und ein Getriebe aufweist, über das ein Zahnring des Siebrads angetrieben wird.

5. Schmelzefilteranordnung (10) nach einem der vorangehenden Ansprüche, wobei sich die Rückspül-Schneckenfördereinrichtung (34) innerhalb des Rückspülkanals (30) befindet und eine Verbindung (36) besteht, die den Schmelzekanal (20) mit dem Rückspülkanal (30) verbindet und die Verbindung (36) und die Rückspül-Schneckenfördereinrichtung (34) in einem Hauptkörper (50) der Schmelzefilteranordnung (10) integriert sind.

6. Schmelzefilteranordnung (10) nach einem Ansprüche 1-4, die mittels eines (50) Hauptkörpers dargestellt ist, in welchem der Schmelzekanal (20) und der Rückspülkanal (30), innerhalb dem sich die Rückspül-Schneckenfördereinrichtung (34) befindet, angeordnet sind, wobei der Schmelzekanal (20) und der Rückspülkanal (30) oder Abschnitte hiervon innerhalb des gleichen Hauptkörpers (50) der Schmelzefilteranordnung jeweils als Bohrung in dem Hauptkörper (50) ausgebildet sind.

7. Schmelzefilteranordnung (10) nach Anspruch 6, wobei eine Hülle (170) der Rückspül-Schneckenfördereinrichtung (134) von derjenigen Bohrung (160) gebildet wird, welcher eine Förderschnecke (180) der Rückspül-Schneckenfördereinrichtung (134) mit einem Schneckengewindeabschnitt (182) und einem Antriebswellenabschnitt (184) aufweist.

8. Schmelzefilteranordnung (10) nach einem der vorangehenden Ansprüche, die ein Gehäuse aufweist, das die die Rückspül-Schneckenfördereinrichtung (34, 34') umfassende Schmelzefilteranordnung (10) umgreift und das die Siebvorrichtung vollständig umschließt.

9. Schmelzefilteranordnung nach einem der vorangehenden Ansprüche, wobei ein auf die Siebvorrichtung gerichteter Auslass (39) innerhalb des Rückspülkanals durch eine düsenförmige Ausnehmung in dem Hauptkörper (50) gebildet wird.

10. Schmelzefiltervorrichtung nach einem der vorangehenden Ansprüche, wobei die Rückspül-Schneckenfördereinrichtung (34, 34'; 134) eine Förderschnecke (180) mit einem Schneckengewindeabschnitt (182) und einem Antriebswellenabschnitt (184) aufweist, wobei der Antriebswellenabschnitt (184) aus der Schmelzefiltervorrichtung (10) herausragt und ein Dichtungselement aufweist, das den Rückspülkanal (30, 130) abschließt.

11. Schmelzefiltervorrichtung (10) nach einem der vorangehenden Ansprüche, wobei die Schmelzefiltervorrichtung (10) ferner mit einem Antrieb ausgestattet ist, insbesondere ein Elektromotor, mit dem die Rückspül-Schneckenfördereinrichtung (34, 34', 134) angetrieben wird, wobei der Antrieb der Rückspül-Schneckenfördereinrichtung getrennt von Förderantrieben zum Fördern und Druckaufbau in dem Schmelzekanal ansteuerbar ist.

## Claims

1. Melt filter arrangement (10) having a melt channel (20), having a back-flush channel (30) and having a screening apparatus (40) for filtering melt in the melt channel (20), wherein the melt channel (20) and the back-flush channel (30) extend at different surfaces (23, 33) of the screening apparatus (40) through the screening apparatus, **characterized in that** the melt filter arrangement (10) also has a back-flush screw conveyor device (34, 34') within the back-flush channel (30), wherein the back-flush channel has a flushing nozzle (38, 138) which is directed at a surface (33) of the screening apparatus within the back-flush channel (30) and the screening apparatus (40) is formed by a rotatably mounted screen wheel (40), wherein the flushing nozzle (38, 138) is provided in the form of a slot nozzle, and wherein furthermore, the melt channel (20) and the back-flush channel (30) are formed within the same main body (50, 150) of the melt filter arrangement (10, 110), and both are formed sectionally as a bore in the main body, and the bore of the melt channel (20, 120) intersects the bore (160) of the back-flush channel (30, 130), whereby the melt channel (20, 120) is directly connected to the back-flush channel (30, 130).

2. Melt filter arrangement according to Claim 1, wherein the melt channel (20) is configured to accommodate a further screw conveyor device in the form of an extruder screw apparatus (24a, b) for conveying melt in the melt channel.

3. Melt filter arrangement according to Claim 1 or 2, wherein the back-flush channel has an inlet (36, 136) which is connected to the melt channel (120), wherein the back-flush screw conveyor device (34, 34'; 134) is arranged downstream of the inlet (36, 136).

4. Melt filter apparatus according to one of the preceding claims, wherein the screening apparatus:
(a) has a pawl drive which is formed by a toothed ring of the screen wheel and by a reciprocating piston engaging therein;
(b) has a freewheel and a reciprocating piston, wherein the reciprocating piston drives a toothed ring of the screen wheel; or
(c) has an electrical drive which has in particular an electric motor and a gear mechanism via which a toothed ring of the screen wheel is driven.

5. Melt filter arrangement (10) according to one of the preceding claims, wherein the back-flush screw conveyor device (34) is situated within the back-flush channel (30), and there is a connection (36) which connects the melt channel (20) to the back-flush channel (30), and the connection (36) and the back-flush screw conveyor device (34) are integrated in a main body (50) of the melt filter arrangement (10).

6. Melt filter arrangement (10) according to one of Claims 1-4, which is provided by means of a main body (50) in which the melt channel (20) and the back-flush channel (30), within which the back-flush screw conveyor device (34) is situated, are arranged, wherein the melt channel (20) and the back-flush channel (30), or sections thereof, are formed within the same main body (50) of the melt filter arrangement in each case as a bore in the main body (50).

7. Melt filter arrangement (10) according to Claim 6, wherein a sleeve (170) of the back-flush screw conveyor device (134) is formed by that bore (160) which has a conveying screw (180) of the back-flush screw conveyor device (134) with a screw thread section (182) and with a drive thread section (184).

8. Melt filter arrangement (10) according to one of the preceding claims, which has a housing surrounding the melt filter arrangement (10) which comprises the back-flush screw conveyor device (34, 34') and completely enclosing the screening apparatus.

9. Melt filter arrangement according to one of the preceding claims, wherein an outlet (39) directed at the screening apparatus is formed within the back-flush channel by a nozzle-like cutout in the main body (50).

10. Melt filter apparatus according to one of the preceding claims, wherein the back-flush screw conveyor device (34, 34', 134) has a conveying screw (180) with a screw thread section (182) and with a drive thread section (184), wherein the drive thread section (184) projects out of the melt filter apparatus (10) and has a seal element which closes off the back-flush channel (30, 130).

11. Melt filter apparatus (10) according to one of the preceding claims, wherein the melt filter apparatus (10) is also equipped with a drive, in particular an electric motor, by way of which the back-flush screw conveyor device (34, 34', 134) is driven, wherein the drive of the back-flush screw conveyor device is able to be actuated separately from conveyor drives dedicated to conveyance and pressure build-up in the melt channel.

## Revendications

1. Système de filtre pour matière en fusion (10) avec un canal pour matière en fusion (20), un canal de rétrolavage (30) et un dispositif de tamis (40) pour le filtrage de matière en fusion dans le canal pour matière en fusion (20), dans lequel le canal pour matière en fusion (20) et le canal de rétrolavage (30) s'étendent à travers le dispositif de tamis (40) sur des faces différentes (23, 33) du dispositif de tamis (40), **caractérisé en ce que** le système de filtre pour matière en fusion (10) présente en outre un système de transport à vis de rétrolavage (34, 34') à l'intérieur du canal de rétrolavage (30), dans lequel le canal de rétrolavage présente une buse de lavage (38, 138), qui est orientée vers une face (33) du dispositif de tamis à l'intérieur du canal de rétrolavage (30) et le dispositif de tamis (40) est formé par une roue de tamis (40) montée de façon rotative, dans lequel la buse de lavage (38, 138) est prévue sous la forme d'une buse fendue et dans lequel en outre le canal pour matière en fusion (20) et le canal de rétrolavage (30) sont formés à l'intérieur du même corps principal (50, 150) du système de filtre pour matière en fusion (10, 110) respectivement au moins en partie sous forme de perçage dans le corps principal et le perçage du canal pour matière en fusion (20, 120) coupe le perçage (160) du canal de rétrolavage (30, 130), reliant ainsi le canal pour matière en fusion (20, 120) directement au canal de rétrolavage (30, 130).

2. Système de filtre pour matière en fusion selon la revendication 1, dans lequel le canal pour matière en fusion (20) est conçu pour recevoir un autre système de transport à vis sous la forme d'un dispositif de transport à vis d'extrudeuse (24a, b) pour le transport de matière en fusion dans le canal pour matière en fusion.

3. Système de filtre pour matière en fusion selon une revendication 1 ou 2, dans lequel le canal de rétrolavage présente une entrée (36, 136), qui est reliée au canal pour matière en fusion (120), dans lequel le système de transport à vis de rétrolavage (34, 34'; 134) est connecté après l'entrée (36, 136).

4. Système de filtre pour matière en fusion selon l'une quelconque des revendications précédentes, dans lequel le dispositif de tamis:
(a) présente un entraînement à cliquet, qui est formé par une couronne dentée de la roue de tamis et un piston alternatif s'engageant dans celle-ci;
(b) présente une roue libre et un piston alternatif, dans lequel le piston alternatif entraîne une couronne dentée de la roue de tamis; ou
(c) présente un entraînement électrique, qui présente en particulier un moteur électrique et une transmission, par laquelle une couronne dentée de la roue de tamis est entraînée.

5. Système de filtre pour matière en fusion (10) selon l'une quelconque des revendications précédentes, dans lequel le système de transport à vis de rétrolavage (34) se trouve à l'intérieur du canal de rétrolavage (30) et il existe une connexion (36), qui relie le canal pour matière en fusion (20) au canal de rétrolavage (30) et la connexion (36) et le système de transport à vis de rétrolavage (34) sont intégrés dans un corps principal (50) du système de filtre pour matière en fusion (10).

6. Système de filtre pour matière en fusion (10) selon l'une quelconque des revendications 1 à 4, qui est représenté au moyen d'un corps principal (50), dans lequel sont disposés le canal pour matière en fusion (20) et le canal de rétrolavage (30), à l'intérieur duquel se trouve le système de transport à vis de rétrolavage (34), dans lequel le canal pour matière en fusion (20) et le canal de rétrolavage (30) ou des parties de ceux-ci sont formés à l'intérieur du même corps principal (50) du système de filtre pour matière en fusion chaque fois sous forme de perçage dans le corps principal (50).

7. Système de filtre pour matière en fusion (10) selon la revendication 6, dans lequel une enveloppe (170) du système de transport à vis de rétrolavage (134) est formée par le perçage (160), qui présente une vis de transport (180) du système de transport à vis de rétrolavage (134) avec une partie filetée de vis (182) et une partie d'arbre d'entraînement (184).

8. Système de filtre pour matière en fusion (10) selon l'une quelconque des revendications précédentes, qui présente un boîtier, qui entoure le système de filtre pour matière en fusion (10) comprenant le système de transport à vis de rétrolavage (34, 34') et qui enveloppe entièrement le dispositif de tamis.

9. Système de filtre pour matière en fusion selon l'une quelconque des revendications précédentes, dans lequel une sortie (39) orientée vers le dispositif de tamis est formée à l'intérieur du canal de rétrolavage par un évidement en forme de buse dans le corps principal (50).

10. Système de filtre pour matière en fusion selon l'une quelconque des revendications précédentes, dans lequel le système de transport à vis de rétrolavage (34, 34'; 134) présente une vis de transport (180) avec une partie filetée de vis (182) et une partie d'arbre d'entraînement (184), dans lequel la partie d'arbre d'entraînement (184) s'étend hors du système de filtre pour matière en fusion (10) et présente un élément d'étanchéité, qui ferme le canal de rétrolavage (30, 130).

11. Système de filtre pour matière en fusion (10) selon l'une quelconque des revendications précédentes, dans lequel le système de filtre pour matière en fusion (10) est en outre doté d'un entraînement, en particulier d'un moteur électrique, avec lequel le système de transport à vis de rétrolavage (34, 34'; 134) est entraîné, dans lequel l'entraînement du système de transport à vis de rétrolavage peut être commandé séparément d'entraînements de transport pour le transport et la hausse de pression dans le canal pour matière en fusion.
